# FASCICULE DE BREVET EUROPEEN

(11) **EP 3 235 678 B1**
(45) Date de publication et mention de la délivrance du brevet: **21.07.2021**
(21) Numéro de dépôt: 16305465.3
(22) Date de dépôt: 21.04.2016
(51) Int. Cl.: B60M 1/12, B60M 1/24, B60M 1/23

(54) **SYSTÈME DISSIPATIF DE CHALEUR AMELIORÉ D'UN FIL DE CONTACT CONDUCTEUR DE CATÉNAIRE ET PORTION DE CATÉNAIRE ASSOCIÉE**
VERBESSERTES DISSIPATIVES WÄRMESYSTEM EINES LEITENDEN KONTAKTDRAHTS EINER OBERLEITUNG, UND ENTSPRECHENDER OBERLEITUNGSABSCHNITT
IMPROVED HEAT-SINK SYSTEM OF A CONDUCTIVE CONTACT WIRE OF A CATENARY AND ASSOCIATED CATENARY PORTION

(43) Date de publication de la demande: 25.10.2017
(73) Titulaire: SNCF RESEAU, 93418 La Plaine Saint-Denis CEDEX (FR); Furrer and Frey AG, 3005 Bern (CH)
(72) Inventeur: BAUSSERON, Thomas, 89100 SENS (FR); VERSCHELDE, Sylvain, 92000 NANTERRE (FR); MACARY, Pierre, 60540 BORNEL (FR); BODIN, Denis, 75013 PARIS (FR); FURRER, Rico, 1092 BELMONT SUR LAUSANNE (CH); CASALI, Bruno, 3125 TOFFEN (CH)
(74) Mandataire: Delaveau, Sophie

(56) Documents cités:
- BE-A- 477 638
- DE-A1-102010 028 724
- FR-A1- 3 006 636
- JP-A- S 619 348
- JP-A- 2010 052 682
- US-A- 445 103
- US-A- 1 385 698

## Description

L'invention concerne principalement un système dissipatif de chaleur d'un fil de contact conducteur de caténaire destiné à alimenter électriquement des locomotrices circulant sur les voies.

L'invention concerne également un ensemble dissipatif de chaleur composé d'un fil de contact conducteur de caténaire sur lequel est monté un tel système.

L'invention concerne enfin une portion de caténaire munie d'au moins un tel ensemble.

La transmission du courant électrique aux trains est assurée au moyen d'un ou de plusieurs fils conducteurs disposés au-dessus de la voie ferrée et en contact avec les pantographes situés en partie supérieure des locomotrices en circulation. Le ou les fils conducteurs, aussi appelés fils de contact, forment avec les moyens de maintien de ces fils des caténaires.

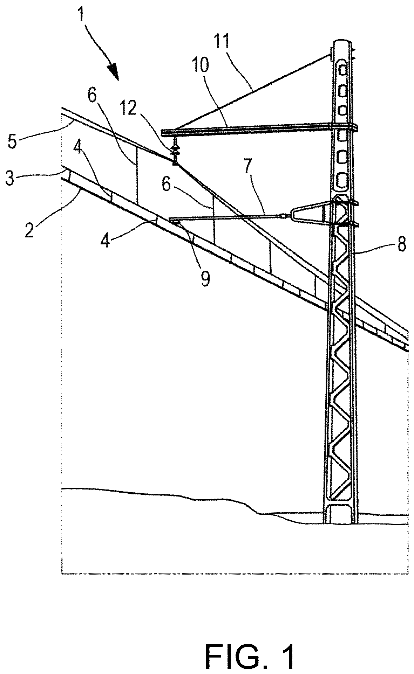

En référence à la figure 1 qui représente schématiquement une portion de caténaire pour une alimentation électrique en continu de 1,5 kilovolts, une caténaire 1 est essentiellement constituée d'un fil de contact conducteur 2 qui est suspendu à un câble porteur auxiliaire 3 par une série de pendules 4, le câble porteur auxiliaire 3 étant lui-même suspendu à un câble porteur principal 5 par une série de pendules 6 de longueurs variables.

Le maintien du câble porteur auxiliaire 3 est assuré par un antibalançant 7 solidaire d'un poteau 8 et relié au câble porteur auxiliaire 3 par un dispositif de suspension 9. Le maintien du câble porteur principal 5 est quant à lui assuré par une console 10, un hauban 11 et un dispositif de suspension 12 reliant le hauban 11, la console 10 et le câble porteur principal 5.

Le fil de contact est généralement en cuivre. Sur certaines caténaires, deux fils de contact formant un système bifilaire sont prévus. Le diamètre des fils de contact est par ailleurs agencé selon le type de caténaire et la vitesse de circulation autorisée, généralement compris entre 107 mm² et 150 mm². Le courant électrique circulant dans le fil de contact est responsable de l'échauffement de ce fil de contact.

L'invention porte particulièrement, sans s'y limiter, aux zones de stationnement prolongé du matériel ferroviaire, telles que les voies de service servant au garage des rames nécessitant des opérations de pré-conditionnement ou de préchauffage, ou encore les voies principales situées en amont de signaux d'arrêt.

Dans ces zones de stationnement, l'appel de courant prolongé au niveau du contact entre les pantographes et le fil de contact conducteur entraîne un échauffement excessif de ce fil de contact. Cet échauffement provoque l'affaiblissement mécanique du fil de contact pouvant engendrer des déformations et dégradations, voire une rupture du fil sous l'effet de la tension mécanique à laquelle le conducteur est soumis, cette tension mécanique pouvant aller jusqu'à 30 kilo Newton selon les conditions de mise en œuvre et de température. Cette tension mécanique est néanmoins nécessaire au maintien de la caténaire pour compenser le phénomène de flèche apparaissant entre deux points de suspension consécutifs du fil de contact. C'est particulièrement le cas pour les voies électrifiées en courant continu de 1,5 kilovolt.

L'utilisation de plusieurs fils de contact ou l'augmentation de la surface de contact entre le fil et les pantographes s'avèrent insuffisants.

Ainsi, sur certaines zones, le stationnement prolongé a été interdit tandis que sur d'autres zones, des tournées d'inspection régulières à pied ou en hauteur sont nécessaires pour veiller à prévenir l'apparition de signes de dégradation du fil de contact.

La publication FR3006636 décrit un système dissipatif réalisé en un matériau conducteur thermique et permettant de réduire ces phénomènes d'échauffement. Ce système dissipatif s'étend longitudinalement au-dessus du fil de contact en laissant libre la zone de contact du fil de contact avec le pantographe de la locomotrice, et comporte des ailettes disposées symétriquement de part et d'autre de la partie centrale dudit système.

Ce système dissipatif est solidarisé au fil de contact par une portion de solidarisation qui comporte deux pattes en V qui viennent en prise dans deux rainures longitudinales également en V déjà ménagées sur le fil de contact.

La partie centrale de ce système dissipatif comporte une rainure verticale qui confère une souplesse suffisante pour écarter les pattes en V et assurer la fixation du système sur le fil par pincement des pattes sur le fil.

Néanmoins, ce système présente un encombrement important du fait de la présence des ailettes, et reste insuffisant pour empêcher une certaine dilation du fil de contact lors d'un arrêt prolongé du matériel ferroviaire.

Les publications JP2010052682, DE102010028724, JPS619348, US445103 et US1385698 décrivent des systèmes dissipatifs de chaleur du domaine. La publication BE477638 décrit un système selon le préambule de la revendication 1.

Dans ce contexte, la présente invention vise un système permettant d'éviter les phénomènes d'échauffements définis précédemment, en visant ainsi à permettre un stationnement avec conservation de l'alimentation en énergie sans limite de durée et en garantissant l'absence de rupture du fil de contact.

La présente invention vise également un système dont l'encombrement est réduit.

Enfin, la présente invention vise un système susceptible d'être suspendu à un câble porteur ou encore en liaison électrique, par exemple à la terre.

A cet effet, le système dissipatif de chaleur de l'invention selon la revendication 1 est apte à s'étendre longitudinalement au-dessus du fil de contact en présentant une portion de solidarisation au fil de contact qui laisse libre la zone de contact du dit fil de contact avec le pantographe d'une locomotrice.

Le système dissipatif de l'invention peut également comporter les caractéristiques optionnelles suivantes considérées isolément ou selon toutes les combinaisons techniques possibles :
- les moyens de serrage sont des boulons traversant lesdits deux demi-profilés.
- les boulons sont régulièrement répartis le long dudit système dissipatif.
- des moyens de liaison mécanique et/ou électrique sont ménagés en partie supérieure dudit système dissipatif.
- les moyens de liaison mécanique et/ou électrique comportent deux rainures longitudinales de profilé en V qui se font face et qui sont respectivement ménagées sur chaque demi-profilé.
- la portion de solidarisation comporte deux pattes qui sont destinées à venir en prise dans deux rainures longitudinales réalisées sur le fil de contact et dont le profilé coïncide avec le profilé des deux pattes.
- dans une première variante, les deux demi-profilés sont en appui de serrage l'un contre l'autre le long d'une ligne de jonction qui s'étend longitudinalement dans l'axe du fil de contact depuis la proximité dudit fil de contact jusqu'à la partie supérieure du système dissipatif.
- le flanc latéral externe de chaque demi-profilés est parallèle à la zone de jonction, et la largeur du système dissipatif n'excède pas 2,5 fois le diamètre du fil de contact.
- selon d'autres variantes, les deux demi-profilés sont en appui de serrage l'un contre l'autre au niveau de leurs parties supérieures respectives en délimitant un évidemment longitudinal entre lesdits deux demi-profilés.
- pour toutes les variantes, le système dissipatif est réalisé en un matériau électriquement et thermiquement conducteur.

L'invention porte également sur un ensemble dissipatif de chaleur d'un fil de contact conducteur de caténaire qui comporte le fil de contact conducteur destiné à être en contact électrique avec la pantographe d'une locomotrice et le système dissipatif de chaleur précédemment décrit monté en solidarisation au dit fil de contact.

L'invention porte enfin sur une portion de caténaire qui comprend une ligne d'alimentation électrique sur laquelle est montée au moins un ensemble dissipatif de chaleur tel que précédemment énoncé.

La portion de caténaire de l'invention peut également comporter les caractéristiques optionnelles suivantes :
- le fil de contact solidarisé au système dissipatif est issu de l'unique fil de contact de la ligne d'alimentation électrique, ou est issu d'un système à deux fils de contact de la ligne d'alimentation électrique qui sont réunis par un système de transition.
- alternativement, le fil de contact solidarisé au système dissipatif de chaleur est monté en dérivation du fil de contact de la ligne d'alimentation électrique.

D'autres caractéristiques et avantages de l'invention ressortiront clairement de la description qui en est donnée ci-dessous, à titre indicatif et nullement limitatif, en référence aux figures annexées parmi lesquelles :
- La figure 1 déjà décrite est une représentation schématique partielle en perspective d'un système de suspension de caténaire de l'art antérieur,
- La figure 2 est une représentation schématique en coupe radiale du système dissipatif de l'invention selon une première variante qui est monté sur le fil de contact en formant un premier ensemble dissipatif de l'invention,
- La figure 3 est une représentation schématique partielle en perspective de l'ensemble dissipatif de la figure 2,
- La figure 4 est une représentation schématique de coté de l'ensemble dissipatif de la figure 2,
- La figure 5 est une représentation schématique en coupe radiale du système dissipatif de la première variante qui est monté sur le fil de contact et suspendu à un câble porteur par un pendule,
- La figure 6 est une représentation schématique en perspective du système dissipatif de la première variante qui est monté sur un fil de contact en étant relié à la terre dans le cadre de son utilisation sur un patin en parallèle d'une caténaire,
- La figure 7 est une représentation schématique en coupe radiale du système dissipatif de l'invention selon une deuxième variante qui est monté sur le fil de contact en formant un deuxième ensemble dissipatif de l'invention,
- La figure 8 est une représentation schématique en coupe radiale du système dissipatif de l'invention selon une troisième variante qui est monté sur le fil de contact en formant un troisième ensemble dissipatif de l'invention,
- La figure 9 est une représentation schématique en perspective d'une portion de caténaire de l'invention selon une première configuration,
- La figure 10 est une représentation schématique en perspective d'une portion de caténaire de l'invention selon une seconde configuration,
- La figure 11 est une représentation schématique en perspective d'une portion de caténaire de l'invention selon une troisième configuration, et
- La figure 12 est une représentation schématique en perspective d'une portion de caténaire de l'invention selon une quatrième configuration.

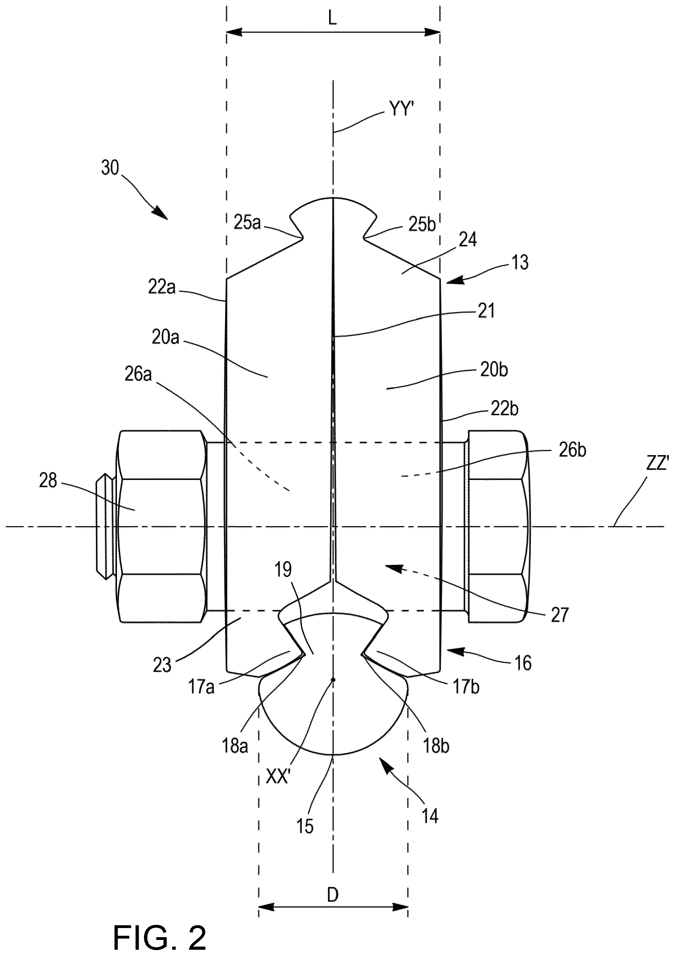

En référence aux figures 2 à 4, le système dissipatif de chaleur de l'invention 13 de la première variante est réalisé en un matériau thermiquement et électriquement conducteur, par exemple en aluminium, en cuivre, en bronze, en un alliage de ces composés ou en tout autre composé électriquement et thermiquement conducteur.

Comme visible sur la figure 2, le système dissipatif de l'invention 13 est destiné à être fixé sur un fil de contact 14 en laissant libre la zone de contact 15 du fil 14 avec les pantographes non représentés.

Le système de l'invention 13 est par conséquent monté sur le fil de contact 14 et comporte à cet effet une portion de solidarisation au fil 16 faites de deux pattes 17a,17b de profil en V qui coïncide avec le profil en V de deux rainures longitudinales 18a, 18b usinées sur la partie supérieure 19 du fil de contact 14.

Ces rainures longitudinales 18a,18b sont déjà présentes sur les fils de contact des caténaires existants pour maintenir ce fil de contact sur les armements. Par conséquent, le système de l'invention s'adapte facilement aux fils de contact existants.

Le système dissipatif 13 comporte deux demi-profilés 20a,20b en appui de contact surfacique l'un contre l'autre le long d'une ligne de jonction 21 d'axe YY' qui est perpendiculaire à l'axe longitudinale XX' du fil de contact 14 et qui forme également axe de symétrie du système 13. Cette configuration en appui de contact surfacique sur la hauteur du système 13 permet de diffuser la chaleur de façon optimale en évitant un effet de type « four » si une cavité d'air était présente.

Chaque demi-profilé 20a,20b présente un flanc externe 22a,22b qui est parallèle à la zone de jonction 21, l'épaisseur de chaque demi-profilé 20a,20b étant tel que la largeur totale L du système dissipatif n'excède pas 2,5 fois le diamètre D du fil de contact 14. Cette géométrie permet de conférer au système dissipatif 13 un encombrement réduit au-dessus du fil de contact 14 et de limiter son poids afin de diminuer son impact sur les différents supports.

En partie inférieure 23 du système dissipatif 13 sont ménagées les pattes 17a,17b de maintien au fil 14 précédemment décrites qui rejoignent la zone de jonction 21 par une configuration en V inversé par rapport au profilé des pattes 17a,17b.

En partie supérieure 24 du système dissipatif 13 sont ménagées deux rainures longitudinales en V 25a,25b respectivement sur chacun des demi-profilés 20a,20b. Ces rainures longitudinales 25a,25b qui se font face de part et d'autre de la zone de jonction 21 présentent chacune le même profilé que les rainures longitudinales 18a,18b du fil de contact 14. Ces rainures longitudinales 18a,18b confèrent à la partie supérieure 24 du système dissipatif 13 la fonction de liaison mécanique et/ou électrique comme il sera décrit plus loin.

Les deux demi-profilés 20a,20b présentent chacun une série d'évidemment 26a,26b régulièrement et longitudinalement répartis (dont un seul est visible sur la figure 2) de forme générale cylindriqueet d'axe ZZ' perpendiculaire à l'axe YY' défini par la zone de jonction 21. Ces évidements 26a,26b coïncident ensemble lorsque les deux demi-profilés 20a,20b sont assemblés pour former un orifice traversant de réception 27 d'un boulon 28.

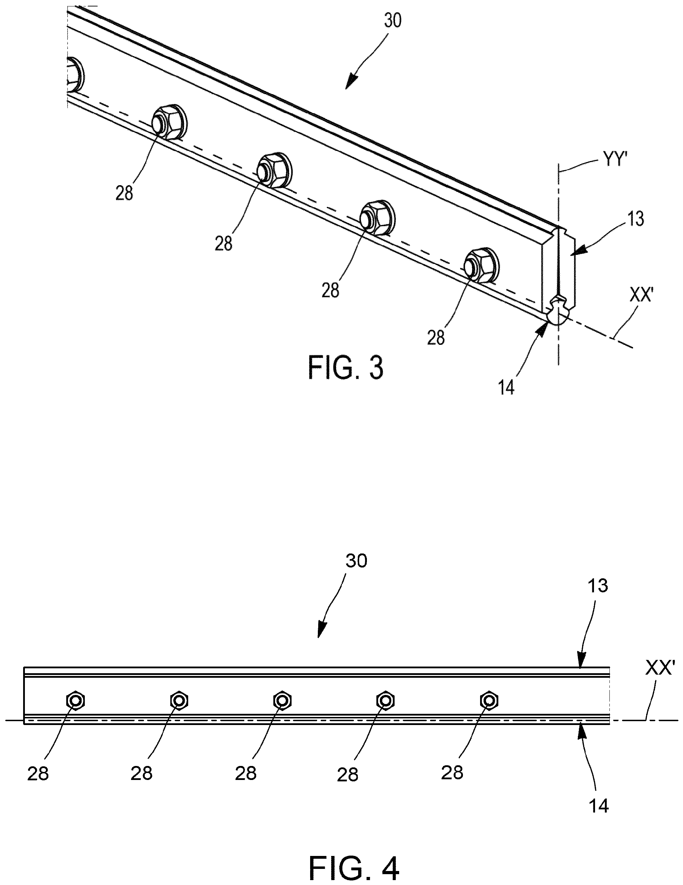

Comme visible sur les figures 3 et 4, les deux demi-profilés 20a,20b du système dissipatif 13 sont ainsi maintenus solidaires entre eux au moyen d'une série de boulons 28 formant un moyen de serrage parmi d'autres à la disposition de l'homme du métier.

Le maintien en serrage des demi-profilés 20a,20b présente l'avantage d'éviter la dilatation du fil de contact 14 en contact avec les pantographes, le système dissipatif 13 reprenant une partie de la tension mécanique du fil 14 en évitant que la section diminue sous l'effet de l'échauffement.

Le système dissipatif 13 de l'invention assure, de par son poids, son volume, et le matériau conducteur thermique dans lequel il est réalisé, la dissipation thermique du fil 14 en augmentant sa capacité thermique. On réduit ainsi la température du fil de contact 14 en contact avec les pantographes ainsi que les phénomènes de dilatation, ce qui assure la conservation des propriétés mécaniques du fil 14 qui ne rompt pas lorsqu'il est en contact prolongé avec les pantographes.

En tout état de cause, si le fil de contact 14 venait à se rompre, le système dissipatif de l'invention garantit le maintien du fil de contact 14 à hauteur, ce qui permet le dégagement aisé du matériel ferroviaire se situant sur la voie où se trouve la rupture.

Les boulons 28 comme moyens de serrage présentent l'avantage d'être simple à installer, même dans des configurations dans lesquelles l'espace au-dessus du fil de contact 14 est réduit, tel que des tunnels par exemple. Comme il sera vu plus loin, les boulons peuvent aussi permettre de solidariser l'ensemble dissipatif de l'invention à un support quelconque.

Les demi-profilés 20a,20b peuvent présenter une longueur variant de 1 à 2 mètres, ce qui permet de faciliter le transport du matériel ainsi l'installation du système dissipatif 13. Les demi-profilés 20a,20b pourront néanmoins présenter de plus grandes longueurs si l'installation le nécessite.

Le système dissipatif 13 monté sur le fil de contact 14 constitue ainsi l'ensemble dissipatif de l'invention 30 selon la première variante.

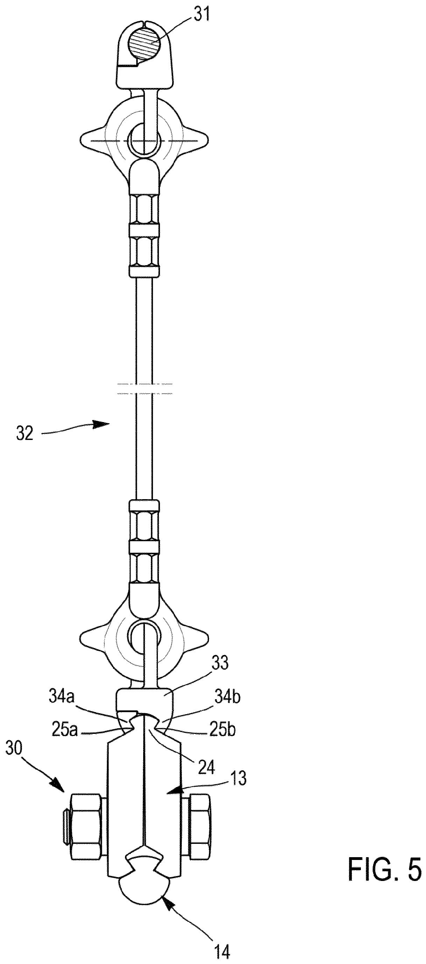

En référence à la figure 5, l'ensemble dissipatif de l'invention 30 est suspendu à un câble porteur 31 par un pendule 32. Le pendule 32 comporte au niveau de sa partie inférieure 33 deux pattes en V 34a,34b qui viennent se loger en prise dans les rainures longitudinales 25a,25b ménagées en partie supérieure 24 du système dissipatif 13.

Le pendule 32 comporte déjà ces pattes 34a,34b qui sont destinés à venir se loger en prise dans les rainures longitudinales 18a,18b du fil de contact 14 lorsque ce dernier est suspendu à un câble porteur 16. C'est la raison pour laquelle les rainures longitudinales 25a,25b ménagées en partie supérieure 24 du système dissipatif 13 sont de profilé identique au profilé des rainures longitudinales 18a, 18b du fil de contact 14. Le pendule 32 ne nécessite donc aucune modification et le système dissipatif de l'invention s'adapte au matériel existant.

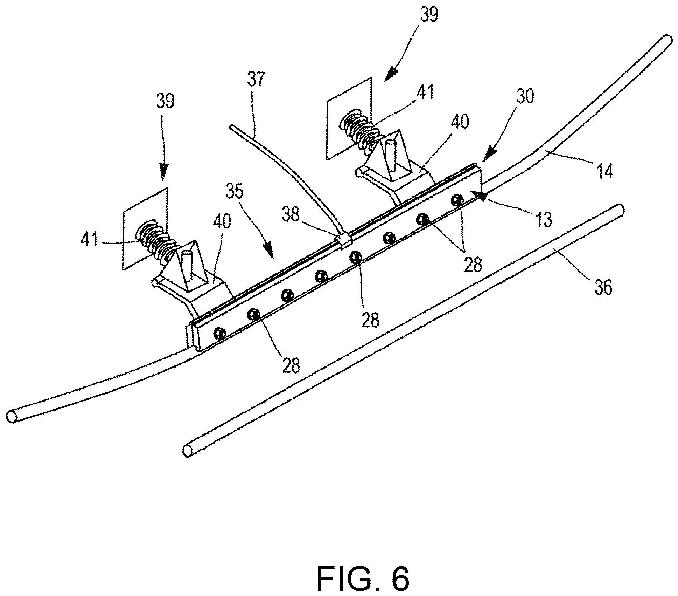

En référence à la figure 6, l'ensemble dissipatif 30 est monté sur un patin de mise à la terre 35 installé en contrebas du fil de contact 36 au contact de la caténaire existante Le patin de mise à la terre permet, de façon connue, d'assurer la transition entre deux caténaires isolées électriquement en formant une zone neutre.

Le système dissipatif 13 est monté sur le fil de contact 14 qui est recourbé comme usuellement pour un patin. La mise à la terre est assurée par un câble conducteur 37 dont l'extrémité formée par une griffe conductrice 38 vient en prise dans les rainures longitudinales 25a,25b (non visibles sur cette figure) de la partie supérieure 24 du système dissipatif 13 qui forme alors moyen de liaison électrique, en plus d'un moyen de liaison mécanique.

Le patin 35 comportant l'ensemble dissipatif 30 est fixé à la structure porteuse non représentée par des éléments de fixation 39 comportant un support de fixation 40 isolé de la structure porteuse par des isolateurs 41.

Chaque support de fixation 40 est solidarisé à l'ensemble dissipatif 30 par les boulons 28 qui viennent enserrer non seulement les deux demi-profilés constituant le système dissipatif 13, mais également les supports de fixation 40.

Ainsi, les boulons 28, ou tout autre moyen de serrage adapté choisi par l'homme du métier, permettent facilement d'assurer la fixation de l'ensemble dissipatif de l'invention sur un support tandis que la partie supérieure 24 du système dissipatif peut assurer la fonction de liaison mécanique (figure 5) et/ou liaison électrique (figure 6).

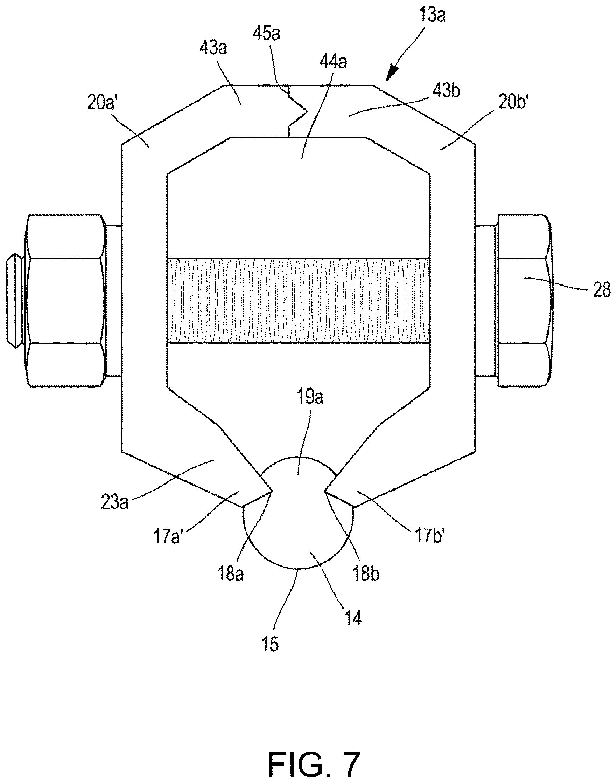

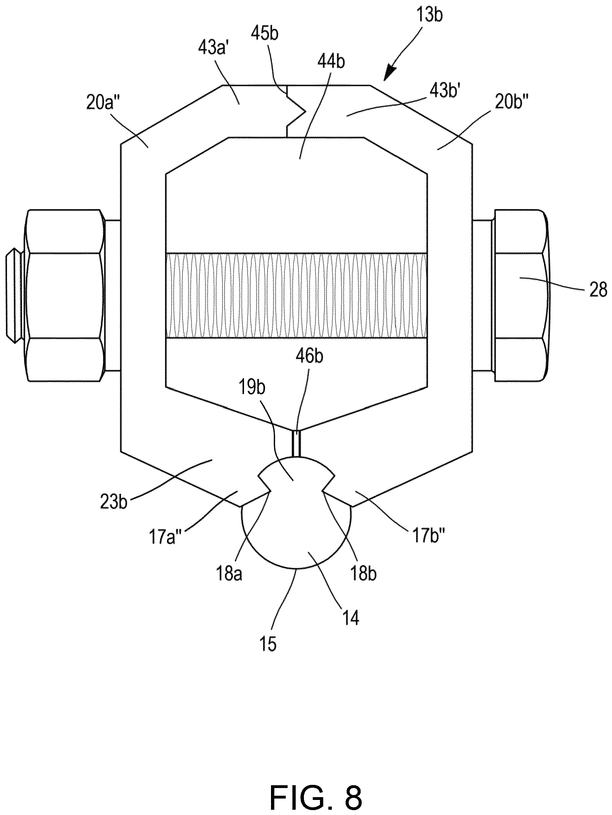

En référence aux figures 7 et 8, le système dissipatif de l'invention 13a,13b selon les deuxième et troisième variantes est réalisé dans les mêmes matériaux que ceux décrits pour le système dissipatif 13 de la première variante. La partie inférieure 23a,23b comporte également des pattes 17a', 17b' ; 17a",17b" de profilé identique à ceux du système dissipatif 13 de la première variante pour s'ajuster aux rainures longitudinales 18a, 18b du fil de contact 14 dont la zone de contact 15 avec les pantographes est également laissée libre.

Dans ces deuxième et troisième variantes, les demi-profilés 20a', 20b' ; 20a",20b" sont de forme générale en coupe respectivement en C et C inversé, et maintenus en appui de serrage l'un contre l'autre au moyen d'une série de boulons 28 (dont un seul est visible sur les figures 7 et 8) traversant le système dissipatif 13a,13b. Cet appui de serrage est réalisé au niveau des parties supérieures respectives 43a, 43b ; 43a',43b' des demi-profilés 20a',20b' ; 20a",20b" en définissant une première zone de jonction 45a,45b et un évidemment longitudinal 44a,44b entre lesdits deux demi-profilés 20a',20b' ;20a",20b".

La différence entre les deuxième et troisième variantes réside dans la partie inférieure 23a,23b du système dissipatif 13a, 13b qui, pour la deuxième variante de la figure 7 laisse libre la partie supérieure 19a du fil de contact 14, ce dont il résulte la présence d'une unique zone de jonction 45a entre les demi-profilés 20a',20b' et qui, pour la troisième variante vient recouvrir la partie supérieure 19b du fil de contact 14 en formant une seconde zone de jonction 46b entre les deux demi-profilés 20a",20b".

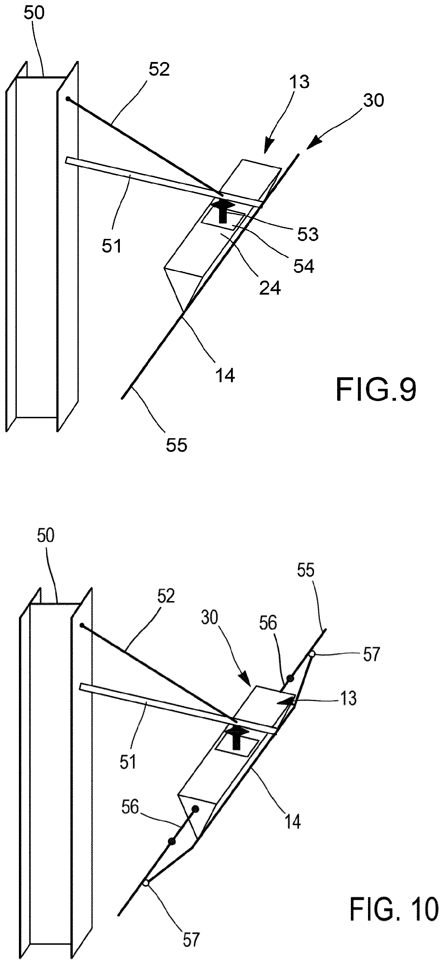

Sur les figures 9 à 12, le système dissipatif de l'invention 13 est représenté de façon schématique par souci de clarté, mais ce système est conforme à la description précédemment faite en référence aux figures 2 à 4. Le système dissipatif pourrait alternativement être également celui des deuxième ou troisième variantes des figures 7 et 8.

En référence à la figure 9 et selon une première configuration, l'ensemble dissipatif de l'invention 30 formé par le système dissipatif 13 décrit précédemment et fixé à un fil de contact conducteur 14 est monté sur un fil de contact principal 55 d'une ligne d'alimentation électrique, de sorte que le fil de contact conducteur 14 faisant partie de l'ensemble de l'invention 30 est confondu avec le fil de contact 55 de la ligne d'alimentation électrique.

Le système de l'invention 13 est maintenu en place relativement à un poteau 50 au moyen d'une console 51, d'un hauban 52 et d'un système de suspension 53. La console 51, le hauban 52 et le système de suspension 53 pourront être déjà existants sur la ligne d'alimentation électrique. Il sera prévu des moyens de fixation 54 adaptés à la partie supérieure 24 du système dissipatif 13, laquelle partie supérieure 24 est facilement préhensible de par la présence des rainures longitudinales non visibles sur cette figure.

La fixation du système de l'invention à la caténaire peut être réalisée de façon différente selon la position du système sur la ligne d'alimentation électrique. On peut notamment prévoir un porteur longitudinal, par exemple celui de la caténaire si cette dernière présente un tel porteur, un porteur transversal ou tout armement rigide lié à une structure de maintien.

Dans le cas où les besoins dissipatifs sont importants, l'ensemble dissipatif de la première configuration peut s'avérer insuffisant. Dans cette hypothèse, on cherche à diminuer voire annuler totalement la tension mécanique du fil de contact au niveau des caténaires du matériel ferroviaire à l'arrêt. Les deuxième et troisième configurations répondent à ces besoins spécifiques.

En référence à la figure 10 et selon la deuxième configuration, l'ensemble dissipatif de l'invention 13 est agencé sur un fil de contact existant 55 d'une ligne d'alimentation électrique de la façon suivante.

Le fil de contact 55 de la ligne d'alimentation électrique est sectionné sur une longueur correspondant à la longueur du système de l'invention 13 et les deux extrémités libres résultantes de ce fil de contact existant 55 sont fixées de part et d'autre au système de l'invention 13 par un dispositif d'ancrage adapté 56. Le fil de contact 14 de l'ensemble dissipatif 30 forme ainsi une ligne de dérivation du fil de contact 55 de la ligne d'alimentation électrique. Profitant de la rigidité mécanique offerte par le système dissipatif, la tension mécanique du fil de contact 14 est ainsi diminuée au niveau du point de contact avec le pantographe d'une locomotrice en stationnement.

La bonne transition du pantographe en mouvement entre le fil de contact 14 et le fil de contact 55 de la ligne d'alimentation électrique sera assurée par des systèmes d'interfaces adaptés 57 dépendant notamment de la vitesse de circulation recherchée, et permettant de compenser le différentiel de hauteur des deux systèmes, le fil de contact 14 se trouvant légèrement plus bas par rapport à la voie que le fil de contact 55 de la ligne d'alimentation électrique.

Ce différentiel de hauteur permet d'assurer que le contact du pantographe s'effectue bien sur le fil de contact 14 intégré au système dissipatif 13. Si le système dissipatif 13 se retrouve insuffisant pour assurer la continuité du potentiel électrique du fil de contact 14, par exemple en cas d'emploi d'un matériau résistif au passage du courant électrique, des connexions en cuivre pourront être ajoutées, reliant le fil de contact 14 au fil de contact 55 de la ligne d'alimentation électrique.

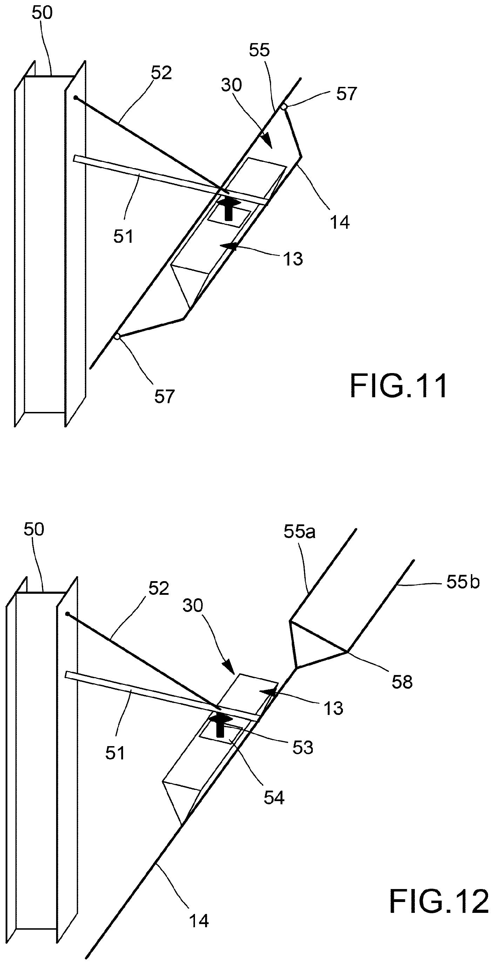

En référence à la figure 11 et selon une troisième configuration, l'ensemble dissipatif de l'invention 30 est agencé sur une ligne d'alimentation électrique de la façon suivante.

L'ensemble dissipatif de l'invention 30 est disposé à proximité et parallèlement à la ligne d'alimentation électrique. Comme pour la deuxième configuration, la transition mécanique entre le fil de contact 14 abaissé et le fil de contact 55 de la ligne d'alimentation électrique est effectuée par des systèmes d'interfaces adaptés 57, et des connexions en cuivre servent à assurer la continuité du potentiel électrique entre le fil de contact 14 et le fil de contact 55 de la ligne d'alimentation électrique. Cette solution permet de garantir une absence totale de tension mécanique du fil de contact 14 dans la zone de stationnement.

L'ensemble dissipatif 30 des deuxième et troisième configurations est maintenu en position de la même façon que l'ensemble dissipatif 30 de la première configuration. Pour la troisième configuration, la longueur de la console 51 sera adaptée pour assurer le décalage parallèle du système de l'invention 13 par rapport au fil de contact existant 55 de la ligne d'alimentation électrique.

En référence à la figure 12 et selon une quatrième configuration, l'ensemble dissipatif de l'invention 30 est agencé sur une ligne d'alimentation électrique de la façon suivante.

Lorsque la caténaire est de type bifilaire, on se trouve donc avec deux fils de contacts 55a,55b de la ligne d'alimentation. Ces deux fils de contact 55a,55b sont, selon cette quatrième configuration, joints ensemble au moyen d'un système de transition adapté 58 pour former un unique fil de contact 14 sur lequel est monté le système dissipatif 13.

La transformation d'une caténaire bifilaire en une caténaire monofilaire est subordonnée à la condition que le courant électrique admissible soit suffisant pour l'ensemble dissipatif 30 impliquant l'unique fil de contact 14.

Pour toutes les variantes décrites précédemment, on prévoit une longueur de système dissipatif 13,13a,13b pouvant aller jusqu'à 20 mètres pour un poids linéique n'excédant pas 6 kg/m. De préférence, le système dissipatif de l'invention présente une longueur comprise entre environ 1 et 6 mètres. Mais le système dissipatif de l'invention peut également s'appliquer à des longueurs significativement plus importantes.

On peut également prévoir l'installation de plusieurs systèmes dissipatifs 13, 13a, 13b consécutivement reliés entre eux par des interfaces adaptées.

L'ensemble dissipatif de l'invention s'adapte préférentiellement aux voies électrifiées en courant continu de 1,5 kilovolt mais trouve également application sur les voies électrifiées en courant alternatif de 25 kilovolts.

Mais l'ensemble dissipatif de l'invention s'adapte également à d'autres voies électrifiées. On citera à titre d'exemples non limitatifs des voies électrifiées en courant continu de 3 kilovolt et des voies électrifiées en courant alternatif de 15 kilovolt.

L'ensemble dissipatif de l'invention permet ainsi d'améliorer la dissipation calorifique du fil de contact au niveau d'une zone de stationnement. Par ailleurs, l'ensemble dissipatif de l'invention permet d'assurer la tenue mécanique du système.

En outre, de par la nature en matériau conducteur thermique métallique du système de l'invention, ce dernier contribue à l'amélioration de la section conductrice en électricité pour renforcer ou améliorer les performances des équipements existants.

## Revendications

1. Système dissipatif de chaleur d'un fil de contact conducteur de caténaire apte à s'étendre longitudinalement au-dessus du fil de contact en présentant une portion de solidarisation au fil de contact qui laisse libre la zone de contact du dit fil de contact avec le pantographe d'une locomotrice, le dit système dissipatif est fait de deux demi-profilés (20a,20b ; 20a',20b' ; 20a",20b") maintenus solidaires entre eux par des moyens de serrage (28), et la portion de solidarisation (16) comporte deux pattes (17a,17b; 17a',17b' ; 17a",17b") de profil en V qui sont destinées à venir en prise dans deux rainures longitudinales (18a,18b) réalisées sur le fil de contact (14) et dont le profilé coïncide avec le profilé des deux pattes (17a,17b; 17a',17b'; 17a", 17b"), ledit système dissipatif est réalisé en un matériau électriquement et thermiquement conducteur et comporte des moyens de liaison mécanique et/ou électrique (25a,25b) qui sont ménagés en partie supérieure (24) dudit système dissipatif (13) et comportent deux rainures longitudinales (25a,25b) de profilé en V qui se font face de part et d'autre d'une zone de jonction (21) des deux demi-profilés (20a,20b ; 20a',20b' ; 20a",20b"), et qui sont respectivement ménagées sur chaque demi-profilé (20a,20b), **caractérisé en ce que** le profilé en V des deux rainures longitudinales (25a,25b) des moyens de liaison mécanique et/ou électrique (25a,25b) coïncide avec le profilé des pattes (17a,17b ; 17a',17b' ; 17a",17b") de la portion de solidarisation (16), ces rainures longitudinales (25a,25b) étant aptes à former logement en prise de pattes de profilé en V (34a,34b) lesquelles sont aptes à venir en prise dans les deux rainures longitudinales (18a,18b) réalisées sur le fil de contact (14).

2. Système dissipatif de chaleur selon la revendication 1, **caractérisé en ce que** les moyens de serrage sont des boulons (28) traversant lesdits deux demi-profilés (20a,20b ; 20a',20b' ; 20a",20b").

3. Système dissipatif de chaleur selon la revendication 2, **caractérisé en ce que** les boulons (28) sont régulièrement répartis le long dudit système dissipatif (13,13a,13b).

4. Système dissipatif de chaleur selon l'une quelconque des revendications précédentes, **caractérisé en ce que** les deux demi-profilés (20a,20b) sont en appui de serrage l'un contre l'autre le long de la ligne de jonction (21) qui s'étend longitudinalement dans l'axe (XX') du fil de contact (14) depuis la proximité dudit fil de contact (14) jusqu'à la partie supérieure (24) du système dissipatif (13).

5. Système dissipatif de chaleur selon la revendication 4, **caractérisé en ce que** le flanc latéral externe (22a,22b) de chaque demi-profilés (20a,20b) est parallèle à la zone de jonction (21), et **en ce que** la largeur (L) du système dissipatif (13) n'excède pas 2,5 fois le diamètre (D) du fil de contact (14).

6. Système dissipatif de chaleur selon l'une quelconque des revendications précédentes, **caractérisé en ce que** les deux demi-profilés (20a',20b' ; 20a",20b") sont en appui de serrage l'un contre l'autre au niveau de leur parties supérieures respectives (43a,43b ; 43a',43b') en délimitant un évidemment longitudinal (44a,44b) entre lesdits deux demi-profilés (20a',20b' ; 20a",20b").

7. Ensemble dissipatif de chaleur d'un fil de contact conducteur de caténaire, **caractérisé en ce qu'**il comporte un système dissipatif de chaleur (13,13a,13b) selon l'une quelconque des revendications 1 à 6 et un fil de contact conducteur (14) destiné à être en contact électrique avec la pantographe d'une locomotrice, sur lequel sont ménagées deux rainures longitudinales (18a,18b), et qui est solidarisé au système dissipatif de chaleur (13,13a,13b) selon l'une quelconque des revendications 1 à 6.

8. Portion de caténaire, **caractérisée en ce qu'**elle comprend une ligne d'alimentation électrique sur laquelle est montée au moins un ensemble dissipatif de chaleur selon la revendication 7.

9. Portion de caténaire selon la revendication 8, **caractérisée en ce que** le fil de contact (14) solidarisé au système dissipatif (13,13a,13b) est issu de l'unique fil de contact (55) de la ligne d'alimentation électrique, ou est issu d'un système à deux fils de contact (55a,55b) de la ligne d'alimentation électrique qui sont réunis par un système de transition (58).

10. Portion de caténaire selon la revendication 9, **caractérisée en ce que** le fil de contact (14) solidarisé au système dissipatif de chaleur (13,13a,13b) est monté en dérivation du fil de contact (55) de la ligne d'alimentation électrique.

## Patentansprüche

1. Wärmeableitendes System eines leitenden Fahrdrahts einer Oberleitung, das sich in Längsrichtung oberhalb des Fahrdrahts erstrecken kann, indem es einen Abschnitt zur festen Verbindung mit dem Fahrdraht aufweist, der die Kontaktzone des Fahrdrahts mit dem Stromabnehmer einer Lokomotive freilässt, wobei das ableitende System aus zwei Halbprofilen (20a, 20b; 20a', 20b'; 20a", 20b") besteht, die durch Spanneinrichtungen (28) fest miteinander verbunden gehalten werden, und der Festverbindungsabschnitt (16) zwei Laschen (17a, 17b; 17a', 17b'; 17a", 17b") mit V-Profil aufweist, die dazu bestimmt sind, in zwei Längsrillen (18a, 18b) in Eingriff zu kommen, die auf dem Fahrdraht (14) hergestellt sind und deren Profil mit dem Profil der zwei Laschen (17a, 17b; 17a', 17b'; 17a", 17b") übereinstimmt, das ableitende System aus einem elektrisch und thermisch leitenden Werkstoff hergestellt ist und Einrichtungen zur mechanischen und/oder elektrischen Verbindung (25a, 25b) aufweist, die im oberen Bereich (24) des ableitenden Systems (13) eingerichtet sind und zwei Längsrillen (25a, 25b) mit V-förmigem Profil aufweisen, die auf beiden Seiten einer Verbindungszone (21) der zwei Halbprofile (20a, 20b; 20a', 20b'; 20a", 20b") einander gegenüberliegen, und die je auf jedem Halbprofil (20a, 20b) eingerichtet sind, **dadurch gekennzeichnet, dass** das V-förmige Profil der zwei Längsrillen (25a, 25b) der Einrichtungen zur mechanischen und/oder elektrischen Verbindung (25a, 25b) mit dem Profil der Laschen (17a, 17b; 17a', 17b'; 17a", 17b") des Festverbindungsabschnitts (16) übereinstimmt, wobei diese Längsrillen (25a, 25b) eine Eingriffsaufnahme von V-förmigen Laschen (34a, 34b) bilden können, die in den zwei auf dem Fahrdraht (14) hergestellten Längsrillen (18a, 18b) in Eingriff kommen können.

2. Wärmeableitendes System nach Anspruch 1, **dadurch gekennzeichnet, dass** die Spanneinrichtungen Bolzen (28) sind, die die zwei Halbprofile (20a, 20b; 20a', 20b'; 20a", 20b") durchqueren.

3. Wärmeableitendes System nach Anspruch 2, **dadurch gekennzeichnet, dass** die Bolzen (28) gleichmäßig entlang des ableitenden Systems (13, 13a, 13b) verteilt sind.

4. Wärmeableitendes System nach einem der vorhergehenden Ansprüche, **dadurch gekennzeichnet, dass** die zwei Halbprofile (20a, 20b) in gegenseitiger Spannauflage entlang der Verbindungslinie (21) sind, die sich in Längsrichtung in der Achse (XX') des Fahrdrahts (14) von der Nähe des Fahrdrahts (14) bis zum oberen Bereich (24) des ableitenden Systems (13) erstreckt.

5. Wärmeableitendes System nach Anspruch 4, **dadurch gekennzeichnet, dass** die äußere seitliche Flanke (22a, 22b) jedes der Halbprofile (20a, 20b) parallel zur Verbindungszone (21) ist, und dass die Breite (L) des ableitenden Systems (13) das 2,5-Fache des Durchmessers (D) des Fahrdrahts (14) nicht überschreitet.

6. Wärmeableitendes System nach einem der vorhergehenden Ansprüche, **dadurch gekennzeichnet, dass** die zwei Halbprofile (20a', 20b'; 20a", 20b") in Höhe ihrer oberen Bereiche (43a, 43b; 43a', 43b') in gegenseitiger Spannauflage sind, indem sie eine Längsaussparung (44a, 44b) zwischen den zwei Halbprofilen (20a', 20b'; 20a", 20b") begrenzen.

7. Wärmeableitende Einheit eines leitenden Fahrdrahts einer Oberleitung, **dadurch gekennzeichnet, dass** sie ein wärmeableitendes System (13, 13a, 13b) nach einem der Ansprüche 1 bis 6 und einen leitenden Fahrdraht (14) aufweist, der dazu bestimmt ist, mit dem Stromabnehmer einer Lokomotive in elektrischem Kontakt zu sein, auf dem zwei Längsrillen (18a, 18b) eingerichtet sind, und der mit dem wärmeableitenden System (13, 13a, 13b) nach einem der Ansprüche 1 bis 6 fest verbunden ist.

8. Oberleitungsabschnitt, **dadurch gekennzeichnet, dass** er eine Stromversorgungsleitung enthält, auf die mindestens eine wärmeableitende Einheit nach Anspruch 7 montiert ist.

9. Oberleitungsabschnitt nach Anspruch 8, **dadurch gekennzeichnet, dass** der fest mit dem ableitenden System (13, 13a, 13b) verbundene Fahrdraht (14) vom einzigen Fahrdraht (55) der Stromversorgungsleitung stammt, oder von einem System mit zwei Kontaktdrähten (55a,55b) der Stromversorgungsleitung stammt, die von einem Übergangssystem (58) vereint werden.

10. Oberleitungsabschnitt nach Anspruch 9, **dadurch gekennzeichnet, dass** der fest mit dem wärmeableitenden System (13, 13a, 13b) verbundene Fahrdraht (14) in Umgehung des Fahrdrahts (55) der Stromversorgungsleitung montiert ist.

## Claims

1. Heat-sink system for a conductive contact wire of a catenary that can extend longitudinally above the contact wire by having a portion of securing to the contact wire which leaves the zone of contact of said contact wire with the pantograph of a locomotive free, wherein said heat-sink system is made of two half-profiles (20a, 20b; 20a', 20b'; 20a", 20b") held secured to one another by clamping means (28), and the securing portion (16) comprises two lugs (17a, 17b; 17a', 17b'; 17a", 17b") of V-shaped profile which are intended to engage in two longitudinal grooves (18a, 18b) produced on the contact wire (14) and the profile of which coincides with the profile of the two lugs (17a, 17b; 17a', 17b'; 17a", 17b"), said heat-sink system is made of an electrically and thermally conductive material and comprises mechanical and/or electrical link means (25a, 25b) which are formed in the upper part (24) of said heat-sink system (13) and comprise two longitudinal grooves (25a, 25b) of V-shaped profile which face one another on either side of a joining zone (21) of the two half-profiles (20a, 20b; 20a', 20b'; 20a", 20b"), and which are respectively formed on each half-profile (20a, 20b), **characterized in that** the V-shaped profile of the two longitudinal grooves (25a, 25b) of the mechanical and/or electrical link means (25a, 25b) coincides with the profile of the lugs (17a, 17b; 17a', 17b'; 17a", 17b") of the securing portion (16), these longitudinal grooves (25a, 25b) being able to form a recess for engagement of lugs of V-shaped profile (34a, 34b) which can engage in the two longitudinal grooves (18a, 18b) produced on the contact wire (14).

2. Heat-sink system according to Claim 1, **characterized in that** the clamping means are bolts (28) passing through said two half-profiles (20a, 20b; 20a', 20b'; 20a", 20b").

3. Heat-sink system according to Claim 2, **characterized in that** the bolts (28) are evenly distributed along said heat-sink system (13, 13a, 13b).

4. Heat-sink system according to any one of the preceding claims, **characterized in that** the two half-profiles (20a, 20b) apply clamping pressure against one another along the joining line (21) which extends longitudinally in the axis (XX') of the contact wire (14) from proximity to said contact wire (14) to the upper part (24) of the heat-sink system (13).

5. Heat-sink system according to Claim 4, **characterized in that** the outer lateral flank (22a, 22b) of each half-profile (20a, 20b) is parallel to the joining zone (21), and **in that** the width (L) of the heat-sink system (13) does not exceed 2.5 times the diameter (D) of the contact wire (14).

6. Heat-sink system according to any one of the preceding claims, **characterized in that** the two half-profiles (20a', 20b'; 20a", 20b") apply clamping pressure against one another in their respective upper parts (43a, 43b; 43a', 43b') by delimiting a longitudinal void (44a, 44b) between said two half-profiles (20a', 20b'; 20a", 20b").

7. Heat-sink assembly for a conductive contact wire of a catenary, **characterized in that** it comprises a heat-sink system (13, 13a, 13b) according to any one of Claims 1 to 6 and a conductive contact wire (14) intended to be in electrical contact with a pantograph of a locomotive, on which are formed two longitudinal grooves (18a, 18b), and which is secured to the heat-sink system (13, 13a, 13b) according to any one of Claims 1 to 6.

8. Catenary portion, **characterized in that** it comprises an electrical power supply line on which is mounted at least one heat-sink assembly according to Claim 7.

9. Catenary portion according to Claim 8, **characterized in that** the contact wire (14) secured to the heat-sink system (13, 13a, 13b) is obtained from the single contact wire (55) of the electrical power supply line, or is obtained from a system with two contact wires (55a, 55b) of the electrical power supply line which are joined by a transition system (58).

10. Catenary portion according to Claim 9, **characterized in that** the contact wire (14) secured to the heat-sink system (13, 13a, 13b) is shunt-mounted on the contact wire (55) of the electrical power supply line.
